# EUROPÄISCHE PATENTANMELDUNG

(11) **EP 1 420 603 A1**
(43) Veröffentlichungstag der Anmeldung: **19.05.2004**
(21) Anmeldenummer: 02025832.3
(22) Anmeldetag: 18.11.2002
(51) Int. Cl.: H04Q 7/38

(54) **Verfahren zur dynamischen Kanalvergabe**

(71) Anmelder: SIEMENS AKTIENGESELLSCHAFT, 80333 München (DE); Siemens Mobile Communications S.p.A., 20126 Milano (IT)
(72) Erfinder: Deinzer, Arnulf, Prof.Dr., 87435 Kempten (DE); Gangai, Stefano, 20123 Mailand (IT); Rocchetti, Alfredo, 82061 Neuried (DE)

(57) **Zusammenfassung**

Die Erfindung betrifft ein Verfahren zur dynamischen Vergabe von Funkressourcen in einem zellularen CDMA Mobilfunk-Kommunikationssystem, welches mindestens eine Teilnehmerstation, eine Basisstation und einen Basisstationscontroller umfasst und welches mindestens zwei Frequenzbänder pro Funkzelle aufweist, wobei ein Frequenzband zur Broadcast-Übertragung von Informationen genutzt wird. Erfindungsgemäß erfolgt die dynamische Vergabe von Funkressourcen aus Ressourcen der mindestens zwei Frequenzbänder.
Ein Vorteil dieses Verfahrens ist darin zu sehen, dass dadurch, dass sich die dynamische Vergabe von Funkressourcen auf mehrere Frequenzbänder erstreckt, eine effektivere Nutzung der Funkressourcen möglich wird.

## Beschreibung

Die Erfindung betrifft ein Verfahren zur dynamischen Vergabe von Funkressourcen in einem zellularen CDMA Mobilfunk-Kommunikationssystem nach dem Oberbegriff des Anspruchs 1.

In Funk-Kommunikationssystemen werden Informationen (beispielsweise Sprache, Bildinformation, Videoinformation, SMS (Short Message Service) oder andere Daten) mit Hilfe von elektromagnetischen Wellen über eine Funkschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen.

Der Zugriff von Stationen auf die gemeinsamen Funkressourcen des Übertragungsmediums, wie zum Beispiel Zeit, Raum, Frequenz, Leistung wird bei Funk-Kommunikationssystemen durch Vielfachzugriffsverfahren (Multiple Access, MA) geregelt.

Der Wunsch nach höheren Datenraten, neuartigen Diensten und hoher Dienstequalität (Quality of Service, QoS) machte den Übergang von Mobilfunknetzen der zweiten Generation wie z.B. GSM (Global System for Mobile Communication) zu Mobilfunknetzen der dritten Generation (im allgemeinen UMTS, Universal Mobile Telecommunications System, genannt) erforderlich. Im Rahmen des 3GPP (3^{rd} Generation Partnership Project) wurden drei Funkzugangstechnologien für Systeme der dritten Generation definiert: FDD (Frequency Division Duplex access), TDD-HCR (Time Division Duplex High Chip Rate) und TDD-LCR (Time Division Duplex Low Chip Rate). Letztere ist auch unter dem Namen TD-SCDMA (Time Division - Synchronous Code Division Multiple Access) bekannt. Weiterhin wurde eine vierte Funkzugangstechnologie unter dem Namen CDMA 2000 von dem 3GPP 2 entwickelt. Bei diesen vier Systemen handelt es sich um zellulare CDMA Mobilfunk-Kommunikationssysteme.

Die Basisarchitektur eines Mobilfunk-Kommunikationssystems der dritten Generation unterscheidet vier logische Blöcke: die USIM (UMTS Subscriber Identity Module), die Mobilstation, das Funkzugangsnetz und das Kernnetz. Bestandteile des Funkzugangsnetzes sind die Basisstationen, auch Node B genannt, welche die Funkzellen versorgen, sowie Basisstationscontroller (Radio Network Controller RNC), welche das Funkzugangsnetz an das Kernnetz anbinden.

Bei TSM (TD-SCDMA System Mobile), auch TD-SCDMA @ GSM genannt, handelt es sich um ein TD-SCDMA System, welches auf die Infrastruktur eines GSM Kernnetzes zurückgreift. Der Einsatz des GSM Kernnetzes für ein Mobilfunksystem der dritten Generation ist besonders vorteilhaft, da es sich bei GSM um ein in großem Umfang untersuchtes und in vielen Regionen eingesetztes Netz handelt.

Das Funkzugangsnetz eines TSM-Systems ist entsprechend dem GSM-Netz aufgebaut. Es besteht aus TD-SCDMA Basisstationen und Basisstationscontroller (Base Station Controller, BSC).

Prinzipiell gibt es in Mobilfunk-Kommunikationssystemen der dritten Generation zwei Möglichkeiten, Informationen zwischen zwei Kommunikationspartnern auszutauschen. Bei der Leitungsvermittlung (Circuit Switched, CS) wird zu Beginn der Kommunikation ein Kanal eingerichtet, der während der gesamten Dauer der Übertragung bestehen bleibt. Dagegen wird bei der paketvermittelten Übertragung (Packet Swichted, PS) zwischen der Übertragung von Datenpaketen die Verbindung zwischen der Mobilstation und der Basisstation unterbrochen.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt über eine großen Frequenzbereich gespreizt wird. Die von unterschiedlichen Stationen benutzten Spreizcodes innerhalb einer Zelle/Basisstation sind jeweils gegenseitig orthogonal oder zumindest im wesentlichen orthogonal, wodurch ein Empfänger die ihm zugedachte Signalleistung erkennt und andere Signale unterdrückt. Durch CDMA wird die Funkressource Leistung durch Spreizcodes teilnehmerspezifisch separiert.

Verschiedene Vielfachzugriffsverfahren können auch kombiniert werden. So wird bei vielen CDMA Mobilfunk-Kommunikationssystemen eine Kombination von Frequenz-, Zeitund Codevielfachzugriff eingesetzt. Unter dem Begriff der Funkressourcen versteht man dann eine Kombination aus Trägerfrequenz, Zeitschlitz bzw. Zeitschlitzen und Code. Werden gerichtet strahlende Antennen (smart antennas) eingesetzt, so ist auch eine Raumkomponente in den Funkressourcen enthalten (SDMA, Space Division Multiple Access). CDMA Systeme können sowohl ohne Frequenzmultiplex, d.h. unter Verwendung von einem Frequenzband, oder mit Frequenzmultiplex, d.h. unter Verwendung von mehreren Frequenzbändern, zum Einsatz kommen. Bei einem TD-SCDMA Verfahren z.B. können innerhalb eines Frequenzblockes von 5 MHz 3 Frequenzbänder mit einer Bandbreite von je 1.6 MHz verwendet werden.

Bei Verwendung mehrerer Frequenzbänder wird üblicherweise die Organisationsinformation, welche eine Basisstation im Broadcast ausstrahlt, nur auf einem der Frequenzbänder übertragen. Die anderen Frequenzbänder stehen somit ausschließlich für die Nutzinformation der Teilnehmerstationen und gegebenenfalls für verbindungsbegleitende Signalisierung zur Verfügung.

Die knappen zur Verfügung stehenden Funkressourcen limitieren die Anzahl an Teilnehmerstationen, welche von einer Basisstation versorgt werden können. Daher ist ein ökonomischer Umgang mit den Funkressourcen bzw. eine effektive Verteilung derselben an die Teilnehmerstationen nötig.

Bei der dynamischen Vergabe von Funkressourcen (Dynamic Channel Allocation, DCA) handelt es sich um ein Verfahren zur Zuteilung von Funkressourcen in Mobilfunk-Kommunikationssystemen, wenn in diesen eine Verbindung zwischen einer insbesondere mobilen Teilnehmerstation und einer Basisstation etabliert wird. Diese Zuteilung ändert sich bei Systemen mit dynamischer Vergabe von Funkressourcen von einem Verbindungsaufbau zum anderen in Abhängigkeit davon, welche Ressourcen frei und/oder am geeignetsten sind. Bei anderen Systemen können die Kanäle z.B. technisch fixiert sein, d.h. in der Regel ab Werk eingestellt, so dass die Teilnehmerstation nur auf einer oder auf bestimmten Frequenzen sendet und empfängt.

Bislang ist das Vorgehen bei der dynamischen Vergabe von Funkressourcen in CDMA Mobilfunk-Kommunikationssystemen für ein einzelnes Frequenzband definiert. Das Vorhandensein von mehreren Frequenzbändern pro Funkzelle ist in Bezug auf die dynamische Vergabe von Funkressourcen aufgrund der Komplexität des Systems sowohl mit Schwierigkeiten, als auch mit einer Reihe von neuen Möglichkeiten verbunden.

Der Erfindung liegt daher die Aufgabe zugrunde, ein Verfahren zur dynamischen Vergabe von Funkressourcen in einem zellularen CDMA Mobilfunk-Kommunikationssystem und ein entsprechendes CDMA Mobilfunk-Kommunikationssystem der eingangs genannten Art vorzustellen, welches eine effektive Vergabe von Funkressourcen an die Teilnehmerstationen ermöglicht.

Diese Aufgabe wird hinsichtlich des Verfahrens durch ein Verfahren mit den Merkmalen des Anspruchs 1 gelöst.

Ausgestaltungen und Weiterbildungen der Erfindung sind Gegenstand der Unteransprüche.

Erfindungsgemäß erfolgt die dynamische Vergabe von Funkressourcen aus Ressourcen der mindestens zwei Frequenzbänder.

Bei den Teilnehmerstationen kann es sich insbesondere um Mobilstationen handeln.

Die Ressourcen umfassen dabei mehrere Codes und Frequenzen. Sie können jedoch aus weiteren Komponenten bestehen, so z.B. aus Zeitschlitzen bei einem TD-Vielfachzugriffsverfahren oder auch einer räumlichen Komponente bei Orts-Vielfachzugriffsverfahren.

Dass die dynamische Vergabe von Funkressourcen aus Ressourcen mehrerer Frequenzbänder erfolgt, bedeutet z.B. bei Verwendung von zwei Frequenzbändern, dass an eine Teilnehmerstation Ressourcen aus dem einen oder aus dem anderen oder auch aus beiden Frequenzbändern vergeben werden können. Im Laufe der Entscheidung darüber, welches Frequenzband bzw. welche Frequenzbänder für die Teilnehmerstation verwendet werden, wird nicht nur die Ressourcensituation (gekennzeichnet durch z.B. Anzahl der verfügbaren Ressourcen, Signal-zu-Rausch Verhältnis der Ressourcen, etc.) eines Frequenzbandes, sondern die Ressourcensituation mehrer Frequenzbänder betrachtet. Die Entscheidung, Ressourcen eines bestimmten Frequenzbandes an eine Teilnehmerstation zu vergeben, hängt also im allgemeinen von der Ressourcensituation von mindestens einem weiteren Frequenzband ab.

Ein Vorteil des erfindungsgemäßen Verfahrens ist darin zu sehen, dass dadurch, dass sich die dynamische Vergabe von Funkressourcen auf mehrere Frequenzbänder erstreckt, eine effektivere Nutzung der Funkressourcen möglich wird. Besonders in Hinsicht auf das zur Broadcast-Übertragung von Informationen genutzte Frequenzband ist dies von Bedeutung. So erlaubt es das erfindungemäße Verfahren, genügend Ressourcen auf dem zur Broadcast-Übertragung von Informationen genutzten Frequenzband nicht zu vergeben und somit für Signalisierungszwecke zu reservieren, indem die Übertragung von Nutzinformation weittestgehend durch die nicht zur Broadcast-Übertragung von Informationen genutzten Frequenzbänder übernommen wird. Überdies steht bei der Ressourcenvergabe nach Qualitätskriterien ein größerer Umfang an Ressourcen bei dem erfindungsgemäßen Verfahren zur Verfügung im Vergleich zur dynamischen Vergabe von Ressourcen für jedes einzelne Frequenzband.

Vorteilhafterweise wird ein Parameter verwendet, welcher eine Anzahl von aktuell nicht zu vergebenden Ressourcen des zur Broadcast-Übertragung von Informationen genutzten Frequenzbandes enthält. Dieser Parameter wird eingeführt, um eine bestimmte Anzahl der Ressourcen des zur Broadcast-Übertragung von Informationen genutzte Frequenzbandes für Signalisierungszwecke zu reservieren. Hiermit soll vermieden werden, dass zu viele Ressourcen des zur Broadcast-Übertragung von Informationen genutzten Frequenzbandes für Nutzinformation vergeben wird, so dass die notwendige Signalisierung nicht mehr unbeeinträchtigt ablaufen kann. Dies hätte äußerst negative Folgen für die Kommunikation. Bei dem Parameter handelt es sich insbesondere um eine ganze Zahl. Man kann den Parameter als einen Sollwert interpretieren.

In einer Weiterbildung der Erfindung wird die Anzahl der aktuell nicht vergebenen Ressourcen des zur Broadcast-Übertragung von Informationen genutzten Frequenzbandes mit dem Parameter verglichen. Dies entspricht einer Ist-Soll Differenzbildung. Ein kritischer Zustand für das Kommunikationssystem könnte erreicht sein, wenn der Istwert (die Anzahl der aktuell nicht vergebenen Ressourcen des zur Broadcast-Übertragung von Informationen genutzten Frequenzbandes) geringer als der Sollwert (Wert des Parameters) ist. In diesem Fall können Maßnahmen zur Abhilfe getroffen werden.

Gemäß einer vorteilhaften Ausgestaltung der Erfindung setzt sich die Anzahl der aktuell nicht vergebenen Ressourcen des zur Broadcast-Übertragung von Informationen genutzten Frequenzbandes, die mit dem Parameter verglichen werden, aus Ressourcen zusammen, welche eine Zugangskontrolle bestanden haben. Dies bedeutet, dass nicht notwendigerweise jede nicht vergebene Ressource des zur Broadcast-Übertragung von Informationen genutzten Frequenzbandes Bestandteil der Anzahl der aktuell nicht vergebenen Ressourcen des zur Broadcast-Übertragung von Informationen genutzten Frequenzbandes, die mit dem Parameter verglichen werden, darstellt. Die Zugangskontrolle kann somit eine Selektion der aktuell nicht vergebenen Ressourcen des zur Broadcast-Übertragung von Informationen genutzten Frequenzbandes bedeuten. Grundsätzlich sind hierzu zahlreiche Selektionen geeignet. Ein Beispiel wäre eine Signal-zu-Rausch Verhältnis basierte Zugangskontrolle, in welche Interferenzwerte, Übertragungsleistungen und maximal erlaubte Übertragungsleistungen eingehen, oder eine Prioritäts- basierte Zugangskontrolle, in welche Signal-zu-Rausch Verhältnisse und Schwellenwerte eingehen.

Da sich die Anzahl der aktuell nicht vergebenen Ressourcen des zur Broadcast-Übertragung von Informationen genutzten Frequenzbandes, welche die Zugangskontrolle bestanden haben, mit der Zeit ändern kann, muss der Vergleich der Anzahl der aktuell nicht vergebenen Ressourcen des zur Broadcast-Übertragung von Informationen genutzten Frequenzbandes mit dem Schwellenwert nach einer solchen Änderung erneut durchgeführt werden.

Vorteilhafterweise wird bei der Vergabe von Ressourcen an die mindestens eine Teilnehmerstation eine Priorisierung von Ressourcen berücksichtigt. So kann z.B. für jede Ressource das aktuelle Signal-zu-Rausch Verhältnis ermittelt werden, und so eine Priorisierung von Ressourcen durchgeführt werden. Bei der dynamischen Vergabe von Ressourcen kann dann, wenn mehrere geeignete Ressourcen zur Verfügung stehen, diejenige mit dem günstigsten Signal-zu-Rausch Verhältnis vergeben werden.

Dieses Vorgehen erhöht die Dienstequalität für die Teilnehmerstationen.

In einer bevorzugten Ausführungsform wird die Priorisierung von Ressourcen unter Verwendung von Ergebnissen von Messungen an Ressourcen des zur Broadcast-Übertragung von Informationen genutzten Frequenzbandes und/oder an Ressourcen des mindestens einen nicht zur Broadcast-Übertragung von Informationen genutzten Frequenzbandes durchgeführt. Diese Messungen können vorteilhafterweise von der mindestens einen Teilnehmerstation und/oder von der mindestens einen Basisstation durchgeführt werden. Kommt z.B. ein Zeitvielfachzugriffsverfahren zum Einsatz, so kann die Teilnehmerstation die Ermittlung von Signal-zu-Rausch Verhältnissen der Zeitschlitze, welche für die Übertragung in Abwärtsrichtung verwendet werden (Abwärtszeitschlitze), und die Basisstation die Ermittlung von Signal-zu-Rausch Verhältnissen der Zeitschlitze, welche für die Übertragung in Aufwärtsrichtung verwendet werden (Aufwärtszeitschlitze), übernehmen.

In einer Weiterbildung der Erfindung werden in dem zur Broadcast-Übertragung von Informationen genutzten Frequenzband Ressourcen für die paketvermittelte Übertragung von Informationen reserviert und der Parameter ist derart ausgebildet, dass er eine Anzahl von aktuell nicht zu vergebenden Ressourcen des zur Broadcast-Übertragung von Informationen genutzten Frequenzbandes, welche ausschließlich für die leitungsvermittelte Übertragung von Informationen genutzt werden, enthält. Die Ressourcen werden also in leitungsvermittelte und paketvermittelte Ressourcen aufgeteilt. Diese Aufteilung ist jedoch zeitlich nicht fix. Der Sollwert an nicht zu vergebenden Ressourcen des zur Broadcast-Übertragung von Informationen genutzten Frequenzbandes bezieht sich dann nur auf die leitungsvermittelten Ressourcen.

Vorzugsweise werden, falls die Anzahl der aktuell nicht vergebenen Ressourcen des zur Broadcast-Übertragung von Informationen genutzten Frequenzbandes, welche ausschließlich für die leitungsvermittelte Übertragung von Informationen genutzt werden, geringer als der Wert des Parameters ist, Ressourcen des zur Broadcast-Übertragung von Informationen genutzten Frequenzbandes, welche für die paketvermittelte Übertragung von Informationen reserviert sind, als nicht vergebene Ressourcen, welche ausschließlich für die leitungsvermittelte Übertragung von Informationen genutzt werden, zur Verfügung gestellt. Der Wert des Parameters wird also nur mit der Anzahl der aktuell nicht vergebenen Ressourcen des zur Broadcast-Übertragung von Informationen genutzten Frequenzbandes, welche ausschließlich für die leitungsvermittelte Übertragung von Informationen genutzt werden, verglichen. Stellt sich bei diesem Vergleich heraus, dass die Anzahl der aktuell nicht vergebenen Ressourcen des zur Broadcast-Übertragung von Informationen genutzten Frequenzbandes, welche ausschließlich für die leitungsvermittelte Übertragung von Informationen genutzt werden, im Vergleich zu dem Wert des Parameters zu klein ist, soll versucht werden, diese Anzahl zu erhöhen. Hierzu werden Ressourcen des zur Broadcast-Übertragung von Informationen genutzten Frequenzbandes, welche für die paketvermittelte Übertragung von Informationen reserviert sind, herangezogen. Diese verlieren ihren Status als "für die paketvermittelte Übertragung von Informationen reserviert" und werden zu der Anzahl der aktuell nicht vergebenen Ressourcen des zur Broadcast-Übertragung von Informationen genutzten Frequenzbandes, welche ausschließlich für die leitungsvermittelte Übertragung von Informationen genutzt werden, hinzugezählt, d.h. sie werden eine Teilmenge dieser Anzahl. Dies bedeutet nicht, dass diese Ressourcen nicht wieder den ursprünglichen Status der Reservierung für die paketvermittelte Übertragung zurück erhalten können.

In einer bevorzugten Ausführungsform wird ein derartiger Umfang an Ressourcen des zur Broadcast-Übertragung von Informationen genutzten Frequenzbandes, welche für die paketvermittelte Übertragung von Informationen reserviert sind, als nicht vergebene Ressource, welche ausschließlich für die leitungsvermittelte Übertragung von Informationen genutzt werden, zur Verfügung gestellt, dass die Abweichung der Anzahl der aktuell nicht vergebenen Ressourcen des zur Broadcast-Übertragung von Informationen genutzten Frequenzbandes, welche ausschließlich für die leitungsvermittelte Übertragung von Informationen genutzt werden, von dem Wert des Parameters minimal wird. Am besten sollte also der Zustand erreicht werden, dass die Anzahl der aktuell nicht vergebenen Ressourcen des zur Broadcast-Übertragung von Informationen genutzten Frequenzbandes, welche ausschließlich für die leitungsvermittelte Übertragung von Informationen genutzt werden gleich dem Wert des Parameters ist. Dies könnte dadurch verhindert werden, dass der Umfang an Ressourcen des zur Broadcast-Übertragung von Informationen genutzten Frequenzbandes, welche für die paketvermittelte Übertragung von Informationen reserviert sind, nicht ausreicht, um diese Bedingung zu erfüllten. In diesem Falle sollten dann alle Ressourcen des zur Broadcast-Übertragung von Informationen genutzten Frequenzbandes, welche für die paketvermittelte Übertragung von Informationen reserviert sind, als nicht vergebene Ressource, welche ausschließlich für die leitungsvermittelte Übertragung von Informationen genutzt werden, zur Verfügung gestellt werden.

In einer weiteren Ausgestaltung der Erfindung werden vor dem als nicht vergebene Ressourcen zur-Verfügung-Stellen von Ressourcen des zur Broadcast-Übertragung von Informationen genutzten Frequenzbandes, welche für die paketvermittelte Übertragung von Informationen reserviert sind und welche aktuell vergeben sind, alle Ressourcen des zur Broadcast-Übertragung von Informationen genutzten Frequenzbandes, welche für die paketvermittelte Übertragung von Informationen reserviert sind und welche aktuell nicht vergeben sind, zur Verfügung gestellt. Liegen also ausreichend viele Ressourcen des zur Broadcast-Übertragung von Informationen genutzten Frequenzbandes, welche für die paketvermittelte Übertragung von Informationen reserviert sind und welche aktuell nicht vergeben sind, vor, um die Minimumsbedingung der vorhergehenden Absatzes er erfüllen, so werden keine Ressourcen des zur Broadcast-Übertragung von Informationen genutzten Frequenzbandes, welche für die paketvermittelte Übertragung von Informationen reserviert sind und welche aktuell vergeben sind, als nicht vergebene Ressource, welche ausschließlich für die leitungsvermittelte Übertragung von Informationen genutzt werden, zur Verfügung gestellt.

Vorzugsweise werden nach einer Anfrage nach einem leitungsvermittelten Dienst zu oder von der mindestens einen Teilnehmerstation zuerst Ressourcen des zur Broadcast-Übertragung von Informationen genutzten Frequenzbandes an die mindestens eine Teilnehmerstation vergeben. Ein leitungsvermittelter Dienst von der Teilnehmerstation ist z.B. ein von der Teilnehmerstation initiierter Anruf. Bei einem leitungsvermittelten Dienst zu der Teilnehmerstation kann es sich z.B. um einen Anruf für die Teilnehmerstation aus dem gleichen oder einem anderen Kommunikationssystem handeln. Tritt eine solche Anfrage ein, besteht grundsätzlich die Möglichkeit, an die Teilnehmerstation Ressourcen des zur Broadcast-Übertragung von Informationen genutzten Frequenzbandes oder Ressourcen eines nicht zur Broadcast-Übertragung von Informationen genutzten Frequenzbandes zu vergeben. Als erster Schritt nach der Anfrage nach einem leitungsvermittelten Dienst zu oder von der mindestens einen Teilnehmerstation wird die erste Alternative gewählt.

In Weiterbildung der Erfindung werden an die mindestens eine Teilnehmerstation anstelle der zuerst vergebenen Ressourcen des zur Broadcast-Übertragung von Informationen genutzten Frequenzbandes Ressourcen eines Frequenzbandes, welches nicht zur Broadcast-Übertragung genutzt wird, vergeben, es sei denn, dass sowohl keine Ressourcen eines nicht zur Broadcast-Übertragung von Informationen genutzten Frequenzbandes besser als die zuerst vergebenen Ressourcen sind als auch die Anzahl der aktuell nicht vergebenen Ressourcen des zur Broadcast-Übertragung von Informationen genutzten Frequenzbandes nicht geringer als der Wert des Parameters ist. Es wird also versucht, die zuerst erfolgte Ressourcenvergabe des zur Broadcast-Übertragung von Informationen genutzten Frequenzbandes zu ändern. Von dieser Änderung wird nur abgesehen, wenn die Anzahl der aktuell nicht vergebenen Ressourcen des zur Broadcast-Übertragung von Informationen genutzten Frequenzbandes nicht geringer als der Wert des Parameters ist, d.h. wenn genügend freie Ressourcen des zur Broadcast-Übertragung von Informationen genutzten Frequenzbandes zur Verfügung stehen. Weiterhin wird in diesem Fall zusätzlich geprüft, ob keine Ressourcen eines nicht zur Broadcast-Übertragung von Informationen genutzten Frequenzbandes besser als die zuerst vergebenen Ressourcen sind. Finden sich bessere Ressourcen eines nicht zur Broadcast-Übertragung von Informationen genutzten Frequenzbandes, so werden diese vergeben.

Vorteilhafterweise werden an die mindestens eine Teilnehmerstation anstelle der zuerst vergebenen Ressourcen des zur Broadcast-Übertragung von Informationen genutzten Frequenzbandes Ressourcen eines nicht zur Broadcast-Übertragung von Informationen genutzten Frequenzbandes vergeben, es sei denn, dass die mindestens eine Teilnehmerstation ausschließlich Signalisierungsdienste anfordert. Ein Beispiel für Signalisierungsdienste wäre die Nutzung von SMS (Short Message Service) oder bestimmte Dienste, welche Ortsinformation verarbeiten.

In einer Ausgestaltung der Erfindung werden nach einer Anfrage nach einem paketvermittelten Dienst zu oder von der mindestens einen Teilnehmerstation zuerst Ressourcen eines nicht zur Broadcast-Übertragung von Informationen genutzten Frequenzbandes an die mindestens eine Teilnehmerstation vergeben, wenn aktuell nicht vergebene für paketvermittelte Dienste reservierte Ressourcen eines nicht zur Broadcast-Übertragung von Informationen genutzten Frequenzbandes für den angeforderten Dienst in ausreichendem Umfang zur Verfügung stehen. Ein paketvermittelter Dienst zu einer Teilnehmerstation entspricht z.B. der Übertragung von Daten aus dem Internet zur Teilnehmerstation. Eine Anforderung nach einem paketvermittelten Dienst zu einer Teilnehmerstation kann von einer Zugangseinrichtung des Kernnetzes (SGSN, Serving GPRS Support Node) erfolgen. Im Gegensatz zu einer Anfrage nach einem leitungsvermittelten Dienst werden bei einer Anfrage nach einem paketvermittelten Dienst zuerst bevorzugt Ressourcen eines nicht zur Broadcast-Übertragung von Informationen genutzten Frequenzbandes vergeben.

In einer bevorzugten Ausführungsform der Erfindung werden nach einer Anfrage nach einem paketvermittelten Dienst zu oder von der mindestens einen Teilnehmerstation zuerst Ressourcen des zur Broadcast-Übertragung von Informationen genutzten Frequenzbandes an die mindestens eine Teilnehmerstation vergeben, wenn aktuell nicht vergebene für paketvermittelte Dienste reservierte Ressourcen eines nicht zur Broadcast-Übertragung von Informationen genutzten Frequenzbandes für den angeforderten Dienst nicht in ausreichendem Umfang zur Verfügung stehen.

Gemäß einer vorteilhaften Ausgestaltung werden dann anstelle der zuerst vergebenen Ressourcen des zur Broadcast-Übertragung von Informationen genutzten Frequenzbandes Ressourcen eines nicht zur Broadcast-Übertragung von Informationen genutzten Frequenzbandes an die mindestens eine Teilnehmerstation vergeben, wenn aktuell nicht vergebene für paketvermittelte Dienste reservierte Ressourcen eines nicht zur Broadcast-Übertragung von Informationen genutzten Frequenzbandes für den angeforderten Dienst in ausreichendem Umfang zur Verfügung stehen. Vorzugsweise können dann anstelle der zuerst vergebenen Ressourcen des zur Broadcast-Übertragung von Informationen genutzten Frequenzbandes Ressourcen eines nicht zur Broadcast-Übertragung von Informationen genutzten Frequenzbandes an die mindestens eine Teilnehmerstation vergeben werden, wenn aktuell nicht vergebene für paketvermittelte Dienste reservierte Ressourcen eines nicht zur Broadcast-Übertragung von Informationen genutzten Frequenzbandes in ausreichendem Umfang zur Verfügung stehen und im Vergleich zu den zuerst vergebenen Ressourcen ein größerer Umfang an Ressourcen für paketvermittelte Dienste angefordert wird. Ein Wechsel von den zuerst vergebenen Ressourcen des zur Broadcast-Übertragung von Informationen genutzten Frequenzbandes zu Ressourcen eines nicht zur Broadcast-Übertragung von Informationen genutzten Frequenzbandes kann also verschiedenen Bedingungen unterliegen: dem in ausreichendem Umfang Vorhandensein von Ressourcen eines nicht zur Broadcast-Übertragung von Informationen genutzten Frequenzbandes und dem in ausreichendem Umfang Vorhandensein von Ressourcen eines nicht zur Broadcast-Übertragung von Informationen genutzten Frequenzbandes in Verbindung mit einer Anfrage nach einem größeren Ressourcenvolumen für paketvermittelte Dienste.

In einer Weiterbildung der Erfindung überträgt die mindestens eine Teilnehmerstation bei einer Anfrage nach einem Dienst Messergebnisse von Abwärts-Messungen an Ressourcen des zur Broadcast-Übertragung von Informationen genutzten Frequenzbandes. Unter Abwärts-Messungen werden Messungen an Ressourcen verstanden, welche zumindest zeitweilig für die Übertragung von Informationen in Abwärtsrichtung von einer Basisstation zu einer Teilnehmerstation genutzt werden. Da Ergebnisse dieser Messungen bei einer Anfrage nach einem Dienst von einer Teilnehmerstation übermittelt werden, müssen die Messungen vor der Anfrage nach einem Dienst durchgeführt werden. Diese Messergebnisse können dann dazu verwendet werden, die besten Ressourcen des zur Broadcast-Übertragung von Informationen genutzten Frequenzbandes zu ermitteln und zu vergeben.

Vorzugsweise führt die mindestens eine Teilnehmerstation nach erfolgter Vergabe von Ressourcen an die mindestens eine Teilnehmerstation Abwärts-Messungen an Ressourcen durch. Diese Messungen können dann bei der Vergaben von Ressourcen genutzt werden. Die Abwärts-Messungen können sich dabei auf alle Frequenzbänder erstrecken, d.h. sowohl Ressourcen des zur Broadcast-Übertragung von Informationen genutzten Frequenzbandes, als auch Ressourcen der nicht zur Broadcast-Übertragung von Informationen genutzten Frequenzbänder können vermessen werden. Es ist hierbei sowohl möglich, dass alle Ressourcen vermessen werden, als auch, dass nur eine Teilmenge der Ressourcen vermessen wird.

In Weiterbildung der Erfindung fordert die mindestens eine Basisstation die mindestens eine Teilnehmerstation unter Angabe derjenigen Ressourcen, an welchen die mindestens eine Teilnehmerstation Abwärts-Messungen durchführen soll, zur Durchführung von Abwärts-Messungen auf. Vorteilhafterweise übermittelt der mindestens eine Basisstationscontroller der mindestens einen Basisstation eine Liste, welche diejenigen Ressourcen, an welchen die mindestens eine Teilnehmerstation Abwärts-Messungen durchführen soll, umfasst. Die Liste kann eine Reihenfolge, in welcher die Abwärts-Messungen durchgeführt werden sollen, umfassen.

In einer Ausgestaltung der Erfindung werden die Messergebnisse der Abwärts-Messungen an Ressourcen bei Handover-Entscheidungen verwendet. Hierdurch kann eine sinnvolle Vergabe von qualitativ geeigneten Ressourcen ermöglicht werden.

Vorzugsweise wird das erfindungsgemäße Verfahren auf ein TD-SCDMA Mobilfunk-Kommunikationssystem, insbesondere TSM oder TDD-LCR oder TDD-HCR, angewendet.

Im Hinblick auf das CDMA Mobilfunk-Kommunikationssystem wird die oben genannte Aufgabe durch ein CDMA Mobilfunk-Kommunikationssystem mit den Merkmalen des Anspruchs 26 gelöst.

Erfindungsgemäß weist das Mobilfunk-Kommunikationssystem mit Funkzellen und einer CDMA Teilnehmerseparierung Mittel zur dynamischen Vergabe von Funkressourcen aus Ressourcen der mindestens zwei Frequenzbänder auf.

Mittel und Einrichtungen zur Durchführung der Verfahrensschritte gemäß den Ausgestaltungen und Weiterbildungen der Erfindung können vorgesehen sein.

Einzelheiten und Details der Erfindung werden anhand eines Ausführungsbeispiels im folgenden erläutert. Das Beispiel bezieht sich aus ein TSM-System. Dabei zeigt
- Figur 1: die Basisarchitektur eines TSM-Systems,
- Figur 2: schematisch den Vielfachzugriff eines TSM-Systems,
- Figur 3: einen beispielhaften schematischen Ablauf zur dynamischen Vergabe von Funkressourcen nach der Erfindung,
- Figur 4: einen Entscheidungsablauf als Teil der dynamischen Vergabe von Funkressourcen nach der Erfindung,
- Figur 5: schematisch den Ablauf der Übermittlung von Nachrichten zwischen einer Mobilstation, einer Basisstation und einem Basisstationscontroller.

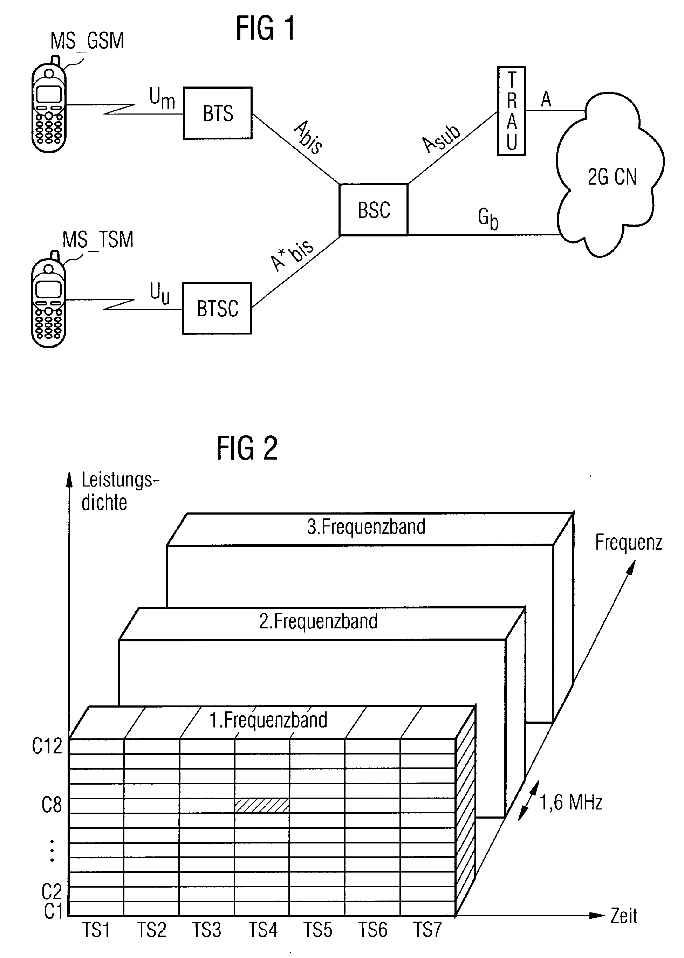

In Figur 1 ist die Basisarchitektur des GSM und des TSM Systems dargestellt. Die Mobilstation für GSM ist mit MS_GSM bezeichnet, diejenige für TSM mit MS_TSM. Im GSM verbindet die Luftschnittstelle Uₘ die Mobilstation MS_GSM mit der Basisstation BTS, im TSM verbindet die Luftschnittstelle Uᵤ die Mobilstation MS_TSM mit der TD-SCDMA Basisstation BTSC. Diese Basisstationen BTS und BTSC stellen die eine Funkzelle versorgende Betriebseinheit mit Mast, Antenne, Hochfrequenztechnik und Spannungsversorgung dar. Die Basisstationen BTS und BTSC sind über die Schnittstellen A_{bis} und A*_{bis} mit dem Basisstationscontroller BSC verbunden, welcher eine oder mehrere Basisstationen BTS und BTSC kontrolliert und steuert. Im TSM verbindet die Schnittstelle G_{b} den Basisstationscontroller BSC mit dem Kernnetz 2G CN der zweiten Generation. Im GSM hingegen befindet sich die Schnittstelle A_{sub} zwischen der Transcodier- und Datenanpassungseinheit TRAU und die Schnittstelle A zwischen der Transcodier- und Datenanpassungseinheit TRAU und dem Kernnetz 2G CN der zweiten Generation. Die Aufgabe der Transcodier- und Datenanpassungseinheit TRAU ist eine Umsetzung der speziellen Kanalstrukturen für Sprach- und Datenkommunikation des GSM-Standards in gängige Standards der Festnetzommunikation.

Figur 2 zeigt schematisch die im TSM verwendeten Vielfachzugriffsverfahren Frequenz-, Zeit- und Codemultiplex. Nach oben aufgetragen ist die Leistungsdichte, dies entspricht dem Codemultiplex. In Figur 2 sind zwölf Codes c1 bis c12 dargestellt. Nach rechts ist die Zeit aufgetragen, dies entspricht einer Einteilung der Funkressource in Zeitschlitze. Gezeigt sind der besseren Übersichtlichkeit wegen nur sieben Zeitschlitze TS1 bis TS7. Ein Teil dieser Zeitschlitze wird für Übertragungen in Aufwärtsrichtung (Aufwärtszeitschlitze), ein anderer Teil für Übertragungen in Abwärtsrichtung (Abwärtszeitschlitze) verwendet. In die Zeichenebene hinein ist die Frequenz aufgetragen. Man erkennt drei Frequenzbänder, welche im TSM z.B. je eine Bandbreite von 1.6 MHz aufweisen können. Schraffiert gezeichnet ist eine Möglichkeit, an eine Mobilstation Funkressourcen zu vergeben: dies entspricht dem achten Code c8, dem vierten Zeitschlitz TS4 und dem ersten Frequenzband. Eines der drei Frequenzbänder wird für die Broadcast-Übertragung von Informationen durch die Basisstation verwendet. Dieses Frequenzband wird im folgenden BCCH-Frequenzband genannt.

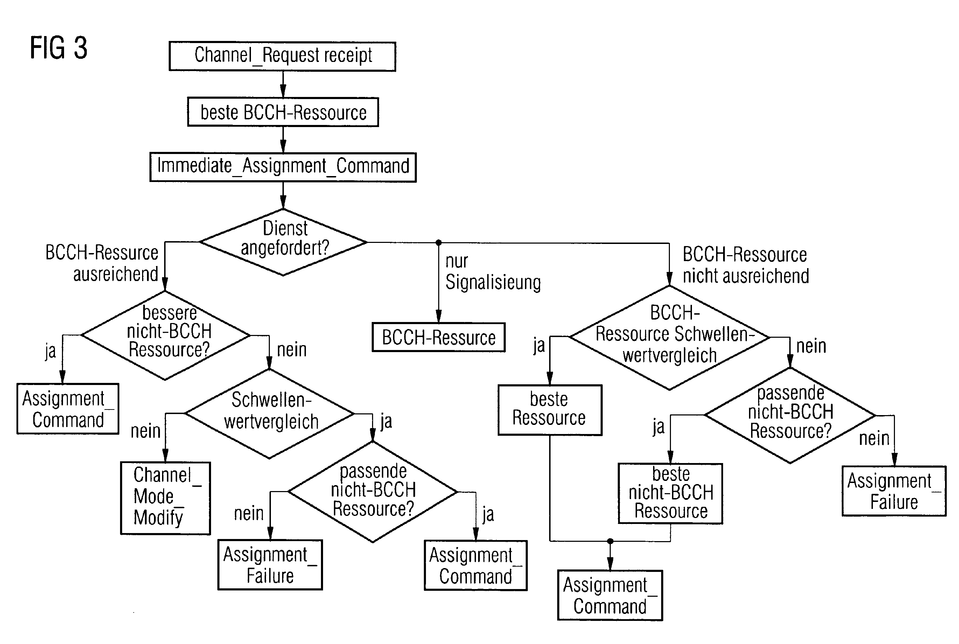

Im folgenden soll beispielhaft anhand von Figur 3 der Ablauf des Verfahrens zur dynamischen Vergabe von Funkressourcen betrachtet werden, wenn eine Mobilstation einen leitungsvermittelten Dienst anfordert. Die Mobilstation sendet eine CHANNEL_REQUEST Nachricht zur Anforderung von leitungsvermittelten Funkressourcen über das BCCH-Frequenzband. Diese Nachricht enthält Ergebnisse von Messungen, welche die Mobilstation an den Abwärtszeitschlitzen des BCCH-Frequenzbandes durchgeführt hat. Die Basisstation übermittelt der Mobilstation eine Meldung, dass sie die Anforderungsnachricht empfangen hat (CHANNEL_REQUEST receipt). Aufgrund der übertragenen Messergebnisse an den Abwärtszeitschlitzen des BCCH-Frequenzbandes wird an die Basisstation die beste Ressource, d.h. diejenige, welche noch nicht vergeben ist und das höchste Signal-zu-Rausch-Verhältnis aufweist, des BCCH-Frequenzbandes vergeben (beste BCCH-Ressource). Hierzu wird vom Netz die IMMEDIATE_ASSIGNMENT_COMMAND Nachricht übermittelt. Die vergebene Ressource setzt sich aus einem Aufwärtszeitschlitz und einem Abwärtszeitschlitz zusammen. Da im betrachteten TSM-System keine SDCCH (Standalone Dedicated Control Channel), über welche z.B. im GSM die Signalisierung während des Verbindungsaufbaus ablaufen kann, vorhanden sind, wird eine direkte Vergabe der Ressourcen in Form eines Verkehrskanals vorgenommen. Dieser wird vorerst zu Signalisierungszwecken eingesetzt. Hierzu wird die nicht dargestellte DIRECT_ASSIGNMENT_PROCEDURE verwendet.

Das Verfahren prüft nun die für den angeforderten Dienst benötigte Ressource (Dienst angefordert?). Sollten von der Mobilstation ausschließlich Signalisierungsdienste wie z.B. SMS angefordert sein, wird an der bereits erfolgten Vergabe der Ressource des BCCH-Frequenzbandes keine Veränderung durchgeführt. Anderenfalls wird überprüft, ob die bereits vergebenen Ressourcen ausreichen, um den angeforderten Dienst zur Verfügung zu stellen.

Ist dies der Fall (BCCH-Ressource ausreichend), so wird weiterhin geprüft, ob bessere Ressourcen eines nicht-BCCH-Frequenzbandes zur Verfügung stehen (bessere nicht BCCH-Ressource?). Hierzu werden Ergebnisse von Messungen verwendet, welche die Mobilstation an Abwärtszeitschlitzen der nicht-BCCH-Frequenzbänder durchgeführt hat. Somit kann als Entscheidungskriterium, ob eine Ressource besser als eine andere ist, wieder das Signal-zu Rausch Verhältnis der Ressourcen der nicht-BCCH-Frequenzbänder verwendet werden. Ist dies der Fall (ja), werden an die Mobilstation neue Ressourcen eines nicht-BCCH-Frequenzbandes vergeben. Hierbei wird die ASSIGNMENT_COMMAND Nachricht übermittelt. Stehen bessere Ressourcen eines nicht-BCCH-Frequenzbandes nicht zur Verfügung (nein), kommt ein Parameter zum Schwellenwertvergleich zum Einsatz (Schwellenwertvergleich). Dieser Parameter enthält eine Anzahl von Ressourcen des BCCH-Frequenzbandes für eine leitungsvermittelte Übertragung, welche nicht vergeben werden dürfen. Diese Ressourcen sollen für Signalisierungszwecke freigehalten werden. Werden zu viele Ressourcen des BCCH-Frequenzbandes für die Nutzinformation der Teilnehmer vergeben, so steht keine ausreichende Ressource für die Information der Broadcast-Übertragung zur Verfügung. Dies würde den reibungslosen Ablauf der Kommunikation über das TSM-Netz gefährden. Beim Schwellenwertvergleich wird überprüft, ob die Anzahl der nicht vergebenen Ressourcen des BCCH-Frequenzbandes für eine leitungsvermittelte Übertragung unter dem Wert des Schwellenwertes liegt. Ist dies nicht der Fall (nein), so kann die bereits an die Mobilstation vergebene Ressource des BCCH-Frequenzbandes beibehalten werden. Hierzu wird eine CHANNEL_MODE_MODIFY Nachricht übermittelt, um anzuzeigen, dass von der Signalisierung zur Nutzinformationsübertragung übergegangen wird. Liegt die Anzahl der nicht vergebenen Ressourcen des BCCH-Frequenzbandes für eine leitungsvermittelte Übertragung jedoch unter dem Wert des Schwellenwertes (ja), so wird geprüft, ob eine passende Ressource eines nicht-BCCH-Frequenzbandes existiert (passende nicht-BCCH Ressource?), wobei der Ausdruck "passende Ressource" impliziert, dass eine Anforderung an die Verfügbarkeit und eine Mindestanforderung an das Signal-zu-Rausch Verhältnis gestellt wird. Hierbei werden wieder Ergebnisse von Messungen verwendet, welche die Mobilstation an Abwärtszeitschlitzen der nicht-BCCH-Frequenzbänder durchgeführt hat. Liegen derartige passende Ressourcen vor (ja), so werden diese an die Mobilstation vergeben und eine ASSIGNMENT_COMMAND Nachricht wird übermittelt. Mangelt es an einer derartigen passenden Ressource (nein), so wird die Anforderung der Mobilstation nach dem leitungsvermittelten Dienst zurückgewiesen und eine ASSIGNMENT_FAILURE Nachricht wird übermittelt.

Reichen die bereits vergebenen Ressourcen des BCCH-Frequenzbandes nicht aus, um den angeforderten Dienst zur Verfügung zu stellen (BCCH-Ressource nicht ausreichend), so findet eine Prüfung daraufhin statt, ob es möglich ist, für den Dienst ausreichende Ressourcen des BCCH-Frequenzbandes zur Verfügung zu stellen, ohne dass die Anzahl der freien Ressourcen des BCCH-Frequenzbandes unter den Schwellenwert sinkt (BCCH-Ressource Schwellenwertvergleich). Ist dies möglich (ja), so wird an die Mobilstation die beste Ressource vergeben (beste Ressource), verbunden mit einer ASSIGNMENT_COMMAND Nachricht. Bei der besten Ressource kann es sich sowohl um eine Ressource eines nicht-BCCH-Frequenzbandes, als auch um eine Ressource des BCCH-Frequenzbandes handeln. Ist hingegen eine Schwellenwertunterschreitung unvermeidbar (nein), so wird geprüft, ob eine passende Ressource eines nicht-BCCH-Frequenzbandes existiert (passende nicht-BCCH Ressource?), wobei der Ausdruck "passende Ressource" impliziert, dass eine Anforderung an die Verfügbarkeit und eine Mindestanforderung an das Signal-zu-Rausch Verhältnis gestellt wird. Existieren derartige Ressburcen (ja), so wird an die Mobilstation die beste von diesen vergeben (beste nicht-BCCH Ressource), verbunden mit einer ASSIGNMENT_COMMAND Nachricht. Mangelt es an einer derartigen passenden Ressource (nein), so wird die Anforderung der Mobilstation nach dem leitungsvermittelten Dienst zurückgewiesen und eine ASSIGNMENT_FAILURE Nachricht wird übermittelt.

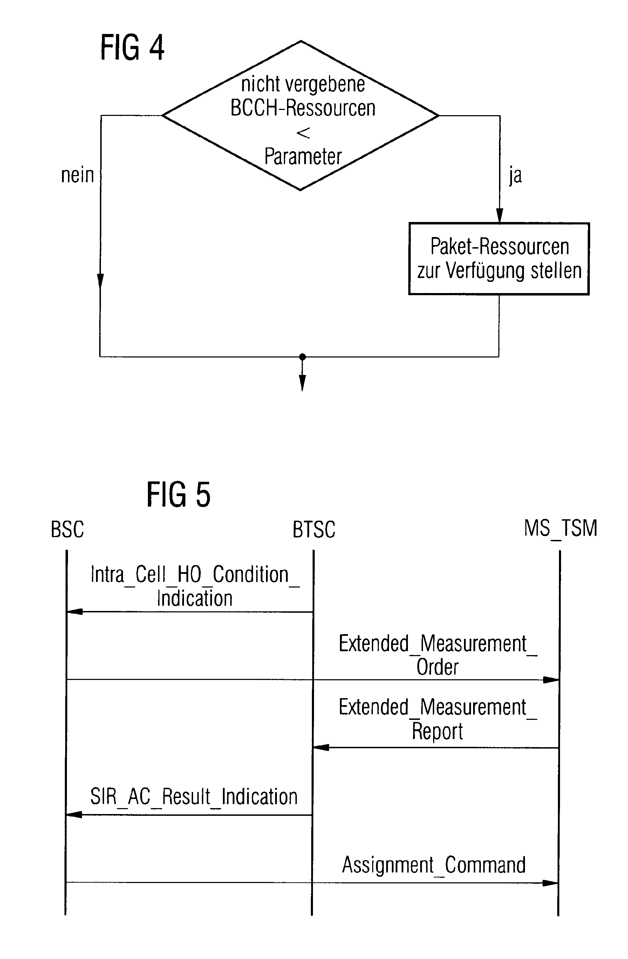

Durch die Vergabe von Ressourcen des BCCH-Frequenzbandes an eine Mobilstation kann der Fall eintreten, dass die Anzahl der nicht vergebenen Ressourcen des BCCH-Frequenzbandes unter den Wert des Parameters sinkt. Dieser Fall wird regelmäßig abgefragt. Eine derartige Abfrage ist in Figur 4 dargestellt. Die nicht vergebenen Ressourcen des BCCH-Frequenzbandes beinhalten bei dieser Abfrage ausschließlich Ressourcen für eine leitungsvermittelte Übertragung von Informationen. Daneben existieren auch Ressourcen, welche für paketvermittelte Übertragungen reserviert sind (z.B. PDPCH, Packet Data Physical Channel). Ergibt die Abfrage, dass die Anzahl der nicht vergebenen Ressourcen des BCCH-Frequenzbandes geringer als der Wert des Parameters ist, dann werden Ressourcen des BCCH-Frequenzbandes, welche für paketvermittelte Übertragung reserviert sind, als nicht vergebene Kanäle für leitungsvermittelte Dienste zur Verfügung gestellt. Hierbei werden zuerst diejenigen Ressourcen, welche nicht vergeben sind, zur Verfügung gestellt. Ist dies nicht ausreichend, um die Anzahl der nicht vergebenen Ressourcen des BCCH-Frequenzbandes über den Wert des Parameters steigen zu lassen, werden weiterhin diejenigen Ressourcen für paketvermittelte Dienste, welche bereits vergeben sind, zur Verfügung gestellt.

Die Vergaben von "besten" Ressourcen erfordert einige Messungen an Ressourcen. Daher müssen die Mobilstationen ISCP (Interference Signal Code Power) Ergebnisse von Messungen an den Abwärtszeitschlitzen zur Verfügung stellen. Diese Messungen werden an den Midambeln jedes Zeitschlitzes durchgeführt, um die Stärke der Interferenz, die mit dem jeweiligen Zeitschlitz einhergeht, zu erhalten.

Beim Verbindungsaufbau übermittelt die Mobilstation mit der CHANNEL_REQUEST Nachricht die Ergebnisse der ISCP Messungen an Abwärtszeitschlitzen des BCCH-Frequenzbandes. Daher wird zuerst eine Ressource des BCCH-Frequenzbandes vergeben, da für diese Ressourcen das Signal-zu-Rausch Verhältnis bekannt ist. Im dedizierten Betrieb führt die Mobilstation dann ISCP Messungen an den Abwärtszeitschlitzen aller Frequenzbänder durch. Dazu fordert die Basisstation die Mobilstation zu den Messungen auf, wobei die Reihenfolge der Messungen einer Liste entnommen wird, welche der Basisstationscontroller zur Verfügung stellt.

Figur 5 zeigt den Ablauf der Übermittlung von Nachrichten bei einem Handover innerhalb einer Zellen zwischen verschiedenen Frequenzbändern. Sobald die Handover-Algorithmen der Basisstation BTSC die Notwendigkeit für ein Intracell-Handover erkannt haben, wird die INTRA_CELL_HO_CONDITION_INDICATION Nachricht an den Basisstationscontroller BSC übermittelt. Hierbei sendet die Basisstation BTSC Werte für ausgewählte Signal-zu-Rausch Verhältnisse, basierend auf Ergebnissen der ISCP Messungen der Abwärtszeitschlitze, welche die Mobilstation MS_TSM bereits durchgeführt hat. Diese Ergebnisse werden dann von dem Basisstationscontroller BSC ausgewertet. Es ist möglich, dass keine der Ressourcen, für welche Messergebnisse zur Verfügung gestellt werden, eine geeignete Vergabemöglichkeit darstellt. Dies ist z.B. dann der Fall, wenn die Ressourcen entweder schon belegt sind oder eine Mindestmaß an Signal-zu-Rausch.Verhältnis nicht erreicht wird. In diesem Fall ordnet der Basisstationscontroller BSC Messungen an weiteren Ressourcen durch die Mobilstation MS_TSM an (EXTENDED_MEASUREMENT_ORDER). Die Ergebnisse dieser Messungen werden von der Mobilstation MS_TSM mit der EXTENDED_MEASUREMENT_REPORT Nachricht an die Basisstation BTSC gesendet. Nun stellt die Basisstation BTSC dem Basisstationscontroller BSC wieder ausgewählte Signal-zu-Rausch Verhältnisse mittels einer SIR_AC_RESULT_ INDICATION Nachricht zur Verfügung. Daraufhin können neue Ressourcen an die Mobilstation MS_TSM vergeben werden (ASSIGNMENT_COMMAND).

Der Ablauf, welcher sich bei einer Vergabe von Ressourcen an die Mobilstation nach einer Anforderung nach einem leitungsvermittelten Dienst ergibt, ist analog zu Figur 5. Lediglich der erste Schritt, die Anzeige der Notwendigkeit für ein Handover, bleibt aus.

Im folgenden wird das Verfahren nach einer Anfragen nach einem paketvermittelten Dienst beschrieben. Nach Möglichkeit, d.h. sofern ausreichende Ressourcen für paketvermittelte Dienste des jeweiligen Frequenzbandes zur Verfügung stehen, werden an die Mobilstation Ressourcen eines nicht-BCCH-Frequenzbandes vergeben. Ist dies nicht möglich, werden an die Mobilstation Ressourcen des BCCH-Frequenzbandes vergeben. Sobald Ressourcen für paketvermittelte Dienste eines nicht-BCCH-Frequenzbandes zur Verfügung stehen, werden diese an die Mobilstation vergeben. Dies trifft auch dann zu, wenn die Mobilstation einen größeren Ressourcenumfang anfordert.

Die Vergabe von Ressourcen bei einer Anforderung der Mobilstation nach paketvermittelten Ressourcen in Aufwärtsrichtung von der Mobilstation läuft folgendermaßen ab: mit der Bestätigung der Anforderung (CHANNEL_REQUEST receipt) werden an die Mobilstation eine paketvermittelte Ressource in Aufwärtsrichtung und eine in Abwärtsrichtung vergeben (Pilotressourcen). Wie oben beschrieben, handelt es sich bei den Pilotressourcen vorzugsweise um Ressourcen eines nicht-BCCH-Frequenzbandes. Ist dies nicht möglich, werden Ressourcen des BCCH-Frequenzbandes vergeben. Die Vergabe von Ressourcen eines nicht-BCCH-Frequenzbandes kann jedoch nicht auf bekannten Signal-zu-Rausch Verhältnissen beruhen, da die CHANNEL_REQUEST Nachricht der Mobilstation nur Informationen über Messungen an Ressourcen des BCCH-Frequenzbandes enthält. Die Mobilstation kann nun weitere paketvermittelte Ressourcen mittels der PACKET_RESOURCE_REQUEST Nachricht anfordern. Handelt es sich bei den Pilotressourcen um Ressourcen eines nicht-BCCH-Frequenzbandes, so wird versucht, die neuen Ressourcen auch als Ressourcen eines nicht-BCCH-Frequenzbandes, vorzugsweise des selben nicht-BCCH-Frequenzbandes, zu vergeben. Handelt es sich bei den Pilotressourcen dagegen um Ressourcen des BCCH-Frequenzbandes, so können zwei Fälle unterschieden werden: falls der Anfrage nach den neuen paketvermittelten Ressourcen mit Ressourcen eines nicht-BCCH-Frequenzbandes Genüge geleistet werden kann, so wird an die Mobilstation unter Verwendung der Meldungen PACKET_UPLINK_ASSIGNMENT und RESOURCE_RECONFIGURE diese Ressource vergeben. Sind dagegen nicht vergebene paketvermittelte Ressourcen eines nicht-BCCH-Frequenzbandes nicht in ausreichendem Maß vorhanden, so muss die Anfrage der Mobilstation nach neuen Ressourcen abgewiesen werden. Es bleiben in diesem Fall die Pilotkanäle des BCCH-Frequenzbandes an die Mobilstation vergeben.

Die Vergabe von Ressourcen bei einer Anforderung der SGSN (Serving GPRS Support Node) nach paketvermittelten Ressourcen in Abwärtsrichtung zu der Mobilstation läuft folgendermaßen ab: es muss geprüft werden, ob bereits ein TBF (Temporary Block Flow, d.h. zeitweilig Übertragung von Informationspaketen) existiert. Ist dies gegeben, so könnte für den TBF das BCCH-Frequenzband für die Pilotressourcen (eine Uplink und eine Downlink Ressource) verwendet worden sein. Wird ein größerer Umfang an Ressourcen für paketvermittelte Dienste eines nicht-BCCH-Frequenzbandes aufgefunden, so werden diese Ressourcen vergeben. Wird ein entsprechender Umfang an Ressourcen eines nicht-BCCH-Frequenzbandes nicht aufgefunden, wird an der Vergabe der Pilotressource keine Veränderung vorgenommen. Für die Pilotressourcen für den TBF könnte auch ein nicht-BCCH-Frequenzband verwendet worden sein. Stehen weitere Ressourcen des selben nicht-BCCH-Frequenzbandes zur Verfügung, so werden diese vergeben. Existiert noch kein TBF für die Mobilstation, so werden Ressourcen eines nicht-BCCH-Frequenzbandes vergeben, falls diese verfügbar sind. Ist dies nicht gegeben, so werden Pilotressourcen in Form einer Aufwärts- und einer Abwärtsressource des BCCH-Frequenzbandes vergeben.

## Patentansprüche

1. Verfahren zur dynamischen Vergabe von Funkressourcen in einem zellularen CDMA Mobilfunk-Kommunikationssystem, welches mindestens eine Teilnehmerstation (MS_TSM), eine Basisstation (BTSC) und einen Basisstationscontroller (BSC) umfasst und welches mindestens zwei Frequenzbänder pro Funkzelle aufweist, wobei ein Frequenzband zur Broadcast-Übertragung von Informationen genutzt wird,
**dadurch gekennzeichnet, dass**
die dynamische Vergabe von Funkressourcen aus Ressourcen der mindestens zwei Frequenzbänder erfolgt.

2. Verfahren nach Anspruch 1, **dadurch gekennzeichnet, dass** ein Parameter verwendet wird, welcher eine Anzahl von aktuell nicht zu vergebenden Ressourcen des zur Broadcast-Übertragung von Informationen genutzten Frequenzbandes enthält.

3. Verfahren nach Anspruch 2, **dadurch gekennzeichnet, dass** die Anzahl der aktuell nicht vergebenen Ressourcen des zur Broadcast-Übertragung von Informationen genutzten Frequenzbandes mit dem Parameter verglichen wird.

4. Verfahren nach Anspruch 2 oder 3, **dadurch gekennzeichnet, dass** die Anzahl der aktuell nicht vergebenen Ressourcen des zur Broadcast-Übertragung von Informationen genutzten Frequenzbandes, die mit dem Parameter verglichen werden, sich aus Ressourcen zusammensetzt, welche eine Zugangskontrolle bestanden haben.

5. Verfahren nach einem der Ansprüche 1 bis 4, **dadurch gekennzeichnet, dass** bei der Vergabe von Ressourcen an die mindestens eine Teilnehmerstation (MS_TSM) eine Priorisierung von Ressourcen berücksichtigt wird.

6. Verfahren nach Anspruch 5, **dadurch gekennzeichnet, dass** die Priorisierung von Ressourcen unter Verwendung von Ergebnissen von Messungen an Ressourcen des zur Broadcast-Übertragung von Informationen genutzten Frequenzbandes und/oder an Ressourcen des mindestens einen nicht zur Broadcast-Übertragung von Informationen genutzten Frequenzbandes durchgeführt wird.

7. Verfahren nach Anspruch 6, **dadurch gekennzeichnet, dass** die Messungen an Ressourcen von der mindestens einen Teilnehmerstation (MS_TSM) und/oder von der mindestens einen Basisstation (BTSC) durchgeführt werden.

8. Verfahren nach einem der Ansprüche 2 bis 7, **dadurch gekennzeichnet, dass** in dem zur Broadcast-Übertragung von Informationen genutzten Frequenzband Ressourcen für die paketvermittelte Übertragung von Informationen reserviert werden und der Parameter derart ausgebildet ist, dass er eine Anzahl von aktuell nicht zu vergebenden Ressourcen des zur Broadcast-Übertragung von Informationen genutzten Frequenzbandes, welche ausschließlich für die leitungsvermittelte Übertragung von Informationen genutzt werden, enthält.

9. Verfahren nach Anspruch 8, **dadurch gekennzeichnet, dass**, falls die Anzahl der aktuell nicht vergebenen Ressourcen des zur Broadcast-Übertragung von Informationen genutzten Frequenzbandes, welche ausschließlich für die leitungsvermittelte Übertragung von Informationen genutzt werden, geringer als der Wert des Parameters ist, Ressourcen des zur Broadcast-Übertragung von Informationen genutzten Frequenzbandes, welche für die paketvermittelte Übertragung von Informationen reserviert sind, als nicht vergebene Ressourcen, welche ausschließlich für die leitungsvermittelte Übertragung von Informationen genutzt werden, zur Verfügung gestellt werden.

10. Verfahren nach Anspruch 9, **dadurch gekennzeichnet, dass** ein derartiger Umfang an Ressourcen des zur Broadcast-Übertragung von Informationen genutzten Frequenzbandes, welche für die paketvermittelte Übertragung von Informationen reserviert sind, als nicht vergebene Ressourcen, welche ausschließlich für die leitungsvermittelte Übertragung von Informationen genutzt werden, zur Verfügung gestellt wird, dass die Abweichung der Anzahl der aktuell nicht vergebenen Ressourcen des zur Broadcast-Übertragung von Informationen genutzten Frequenzbandes, welche ausschließlich für die leitungsvermittelte Übertragung von Informationen genutzt werden, von dem Wert des Parameters minimal wird.

11. Verfahren nach Anspruch 9 oder 10, **dadurch gekennzeichnet, dass** vor dem als nicht vergebene Ressourcen zur-Verfügung-Stellen von Ressourcen des zur Broadcast-Übertragung von Informationen genutzten Frequenzbandes, welche für die paketvermittelte Übertragung von Informationen reserviert sind und welche aktuell vergeben sind, alle Ressourcen des zur Broadcast-Übertragung von Informationen genutzten Frequenzbandes, welche für die paketvermittelte Übertragung von Informationen reserviert sind und welche aktuell nicht vergeben sind, zur Verfügung gestellt werden.

12. Verfahren nach einem der Ansprüche 1 bis 11, **dadurch gekennzeichnet, dass** nach einer Anfrage nach einem leitungsvermittelten Dienst zu oder von der mindestens einen Teilnehmerstation (MS_TSM) zuerst Ressourcen des zur Broadcast-Übertragung von Informationen genutzten Frequenzbandes an die mindestens eine Teilnehmerstation (MS_TSM) vergeben werden.

13. Verfahren nach Anspruch 12, **dadurch gekennzeichnet, dass** an die mindestens eine Teilnehmerstation (MS_TSM) anstelle der zuerst vergebenen Ressourcen des zur Broadcast-Übertragung von Informationen genutzten Frequenzbandes Ressourcen eines Frequenzbandes, welches nicht zur Broadcast-Übertragung genutzt wird, vergeben werden, es sei denn, dass sowohl keine Ressourcen eines nicht zur Broadcast-Übertragung von Informationen genutzten Frequenzbandes besser als die zuerst vergebenen Ressourcen sind als auch die Anzahl der aktuell nicht vergebenen Ressourcen des zur Broadcast-Übertragung von Informationen genutzten Frequenzbandes nicht geringer als der Wert des Parameters ist.

14. Verfahren nach Anspruch 12 oder 13, **dadurch gekennzeichnet, dass** an die mindestens eine Teilnehmerstation (MS_TSM) anstelle der zuerst vergebenen Ressourcen des zur Broadcast-Übertragung von Informationen genutzten Frequenzbandes Ressourcen eines nicht zur Broadcast-Übertragung von Informationen genutzten Frequenzbandesvergeben werden, es sei denn, dass die mindestens eine Teilnehmerstation (MS_TSM) ausschließlich Signalisierungsdienste anfordert.

15. Verfahren nach einem der Ansprüche 1 bis 14, **dadurch gekennzeichnet, dass** nach einer Anfrage nach einem paketvermittelten Dienst zu oder von der mindestens einen Teilnehmerstation (MS_TSM) zuerst Ressourcen eines nicht zur Broadcast-Übertragung von Informationen genutzten Frequenzbandes an die mindestens eine Teilnehmerstation (MS_TSM) vergeben werden, wenn aktuell nicht vergebene für paketvermittelte Dienste reservierte Ressourcen eines nicht zur Broadcast-Übertragung von Informationen genutzten Frequenzbandes für den angeforderten Dienst in ausreichendem Umfang zur Verfügung stehen.

16. Verfahren nach Anspruch 15, **dadurch gekennzeichnet, dass** nach einer Anfrage nach einem paketvermittelten Dienst zu oder von der mindestens einen Teilnehmerstation (MS_TSM) zuerst Ressourcen des zur Broadcast-Übertragung von Informationen genutzten Frequenzbandes an die mindestens eine Teilnehmerstation (MS_TSM) vergeben werden, wenn aktuell nicht vergebene für paketvermittelte Dienste reservierte Ressourcen eines nicht zur Broadcast-Übertragung von Informationen genutzten Frequenzbandes für den angeforderten Dienst nicht in ausreichendem Umfang zur Verfügung stehen.

17. Verfahren nach Anspruch 16, **dadurch gekennzeichnet, dass** dann anstelle der zuerst vergebenen Ressourcen des zur Broadcast-Übertragung von Informationen genutzten Frequenzbandes Ressourcen eines nicht zur Broadcast-Übertragung von Informationen genutzten Frequenzbandes an die mindestens eine Teilnehmerstation (MS_TSM) vergeben werden, wenn aktuell nicht vergebene für paketvermittelte Dienste reservierte Ressourcen eines nicht zur Broadcast-Übertragung von Informationen genutzten Frequenzbandes für den angeforderten Dienst in ausreichendem Umfang zur Verfügung stehen.

18. Verfahren nach Anspruch 16 oder 17, **dadurch gekennzeichnet, dass** dann anstelle der zuerst vergebenen Ressourcen des zur Broadcast-Übertragung von Informationen genutzten Frequenzbandes Ressourcen eines nicht zur Broadcast-Übertragung von Informationen genutzten Frequenzbandes an die mindestens eine Teilnehmerstation (MS_TSM) vergeben werden, wenn aktuell nicht vergebene für paketvermittelte Dienste reservierte Ressourcen eines nicht zur Broadcast-Übertragung von Informationen genutzten Frequenzbandes in ausreichendem Umfang zur Verfügung stehen und im Vergleich zu den zuerst vergebenen Ressourcen ein größerer Umfang an Ressourcen für paketvermittelte Dienste angefordert wird.

19. Verfahren nach einem der Ansprüche 1 bis 18, **dadurch gekennzeichnet, dass** die mindestens eine Teilnehmerstation (MS__TSM) bei einer Anfrage nach einem Dienst Messergebnisse von Abwärts-Messungen an Ressourcen des zur Broadcast-Übertragung von Informationen genutzten Frequenzbandes überträgt.

20. Verfahren nach einem der Ansprüche 1 bis 19, **dadurch gekennzeichnet, dass** die mindestens eine Teilnehmerstation (MS_TSM) nach erfolgter Vergabe von Ressourcen an die mindestens eine Teilnehmerstation (MS_TSM) Abwärts-Messungen an Ressourcen durchführt.

21. Verfahren nach Anspruch 20, **dadurch gekennzeichnet, dass** die mindestens eine Basisstation (BTSC) die mindestens eine Teilnehmerstation (MS_TSM) unter Angabe derjenigen Ressourcen, an welchen die mindestens eine Teilnehmerstation (MS_TSM) Abwärts-Messungen durchführen soll, zur Durchführung von Abwärts-Messungen auffordert.

22. Verfahren nach Anspruch 21, **dadurch gekennzeichnet, dass** der mindestens eine Basisstationscontroller (BSC) der mindestens einen Basisstation (BTSC) eine Liste übermittelt, welche diejenigen Ressourcen, an welchen die mindestens eine Teilnehmerstation (MS_TSM) Abwärts-Messungen durchführen soll, umfasst.

23. Verfahren nach Anspruch 22, **dadurch gekennzeichnet, dass** die Liste die Reihenfolge, in welcher die Abwärts-Messungen von der mindestens einen Teilnehmerstation (MS_TSM) durchgeführt werden sollen, umfasst.

24. Verfahren nach einem der Ansprüche 19 bis 23, **dadurch gekennzeichnet, dass** die Messergebnisse der Abwärts-Messungen an Ressourcen bei Handover-Entscheidungen verwendet werden.

25. Verfahren nach einem der Ansprüche 1 bis 24, **dadurch gekennzeichnet, dass** es auf ein TD-SCDMA Mobilfunk-Kommunikationssystem, insbesondere TSM oder TDD-LCR oder TDD-HCR, angewendet wird.

26. Mobilfunk-Kommunikationssystem mit Funkzellen und einer CDMA-Teilnehmerseparierung zur dynamischen Vergabe von Funkressourcen, umfassend mindestens eine Teilnehmerstation (MS_TSM), eine Basisstation (BSTC) und einen Basisstationscontroller (BSC), welches mindestens zwei Frequenzbänder pro Funkzelle aufweist, wobei ein Frequenzband zur Broadcast-Übertragung von Informationen genutzt wird,
**dadurch gekennzeichnet, dass**
Mittel zur dynamischen Vergabe von Funkressourcen aus Ressourcen der mindestens zwei Frequenzbänder vorhanden sind.
